# EUROPEAN PATENT APPLICATION

(11) **EP 2 369 540 A1**
(43) Date of publication of application: **28.09.2011**
(21) Application number: 11159487.5
(22) Date of filing: 24.03.2011
(51) Int. Cl.: G06Q 10/00, G06Q 30/00

(54) **Registration of product information and authenticity certification**

(30) Priority: 26.03.2010 US 732480
(71) Applicant: Thinglink LLC, San Jose, CA 95164 (US)
(72) Inventor: Engeström, Ulla-Maaria, 00200 Helsinki (FI); Jalkanen, Janne, 02160 Espoo (FI)
(74) Representative: Kalliola, Sanna Marketta

(57) **Abstract**

A method providing a social network of products and certificates of authenticity for products. The method includes providing a product provider interface for uploading product information; generating unique product identifiers and certificates of authenticity for the products; and distributing the unique product identifiers and the and certificates of authenticity to product providers. Additionally the method includes providing an end user interface that enables end users to register ownerships of products, keeping record of products registered to end users, providing to product providers end user information comprising information about products registered to end users, and making information about registered product ownerships available to other end users through the end user interface.

## Description

### TECHNICAL FIELD

The present invention generally relates to registration of product information and authenticity certification of products.

### BACKGROUND ART

Typically customers that buy designer products are interested in having a guarantee that the product they buy is authentic. Some product manufacturers provide a certificate of authenticity with their products. Some product manufacturers also provide a possibility to register ownership of certain product. The details of the implementation of different systems vary.

### SUMMARY

According to a first example aspect of the invention there is provided a method comprising:
providing a general purpose product registration system by
providing a product provider interface for uploading product information concerning certain one or more products;
generating unique product identifiers and certificates of authenticity for said certain one or more products;
distributing the unique product identifiers and the and certificates of authenticity through the product provider interface to product providers associated with said certain one or more products;
providing an end user interface that enables end users to register ownerships of products by registering unique product identifiers associated with the products, keeping record of unique product identifiers registered to end users, and providing to product providers end user information comprising information about unique product identifiers registered to end users, and
making information about registered product ownerships available to other end users through the end user interface.

According to a second example aspect of the invention there is provided an apparatus comprising:
a memory, and
a processor for controlling the operation of the apparatus, configured to control the apparatus to perform
providing a general purpose product registration system by
providing a product provider interface for uploading product information concerning certain one or more products;
generating unique product identifiers and certificates of authenticity for said certain one or more products;
distributing the unique product identifiers and the and certificates of authenticity through the product provider interface to product providers associated with said certain one or more products;
providing an end user interface that enables end users to register ownerships of products by registering unique product identifiers associated with the products, keeping record of unique product identifiers registered to end users in said memory,
providing to product providers end user information comprising information about unique product identifiers registered to end users through the product provider interface, and
making information about registered product ownerships available to other end users through the end user interface.

According to a third example aspect of the invention there is provided a memory medium embodying computer executable program code configured to be executed by a processor of an apparatus, to cause the apparatus to perform:
providing a general purpose product registration system by
providing a product provider interface for uploading product information concerning certain one or more products;
generating unique product identifiers and certificates of authenticity for said certain one or more products;
distributing the unique product identifiers and the and certificates of authenticity through the product provider interface to product providers associated with said certain one or more products;
providing an end user interface that enables end users to register ownerships of products by registering unique product identifiers associated with the products, keeping record of unique product identifiers registered to end users, and
providing to product providers end user information comprising information about unique product identifiers registered to end users, and
making information about registered product ownerships available to other end users through the end user interface.

Different non-binding example aspects of the present invention have been illustrated in the foregoing.

### BRIEF DESCRIPTION OF THE DRAWINGS

The invention will be described, by way of example only, with reference to the accompanying drawings, in which:
- Fig. 1: shows a scenario according to an example embodiment;
- Fig. 2: shows a scenario according to another example embodiment;
- Fig. 3A: shows a scenario according to yet another example embodiment;
- Fig. 3B: shows a scenario according to yet another example embodiment;
- Fig. 4: shows a block diagram of an apparatus according to an example embodiment;
- Fig. 5: shows a user interface according to an example embodiment; and
- Fig. 6: shows an example scenario according to an example embodiment.

### DETAILED DESCRIPTION

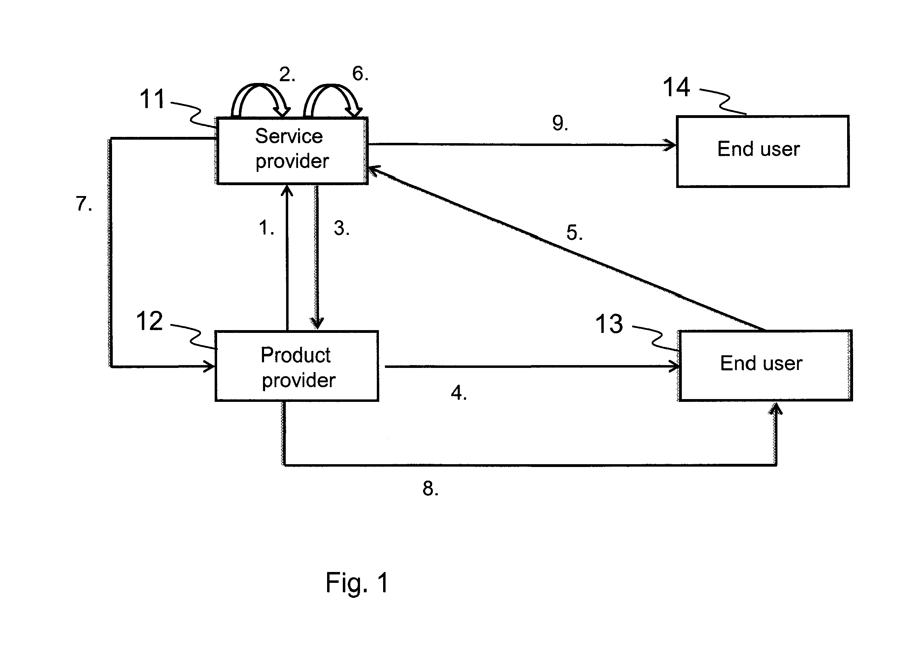

Various embodiment of the invention provide a centralized product registration system that builds social connections around products registered in the system. Figure 1 shows a scenario according to an example embodiment. The scenario shows a service provider system 11, a product provider 12, and end users 13 and 14, and interaction between these parties.

The end users 13 and 14 may be for example regular consumers. They can be physical entities (a person) or legal entities (a company). The product provider is typically a manufacturer of certain product(s). Alternatively the product provider may be a product distributor or the scenario might include a product distributor operating between the product provider and the end user. The service provider system 11 provides a product registration service. The service provider system 11 offers services to different product providers 12 and different end users 13 and 14.

Figure 1 shows only one product provider 12 and two end users 13 and 14 for the sake of clarity, but there can be any number of product providers and end users.

According to an example embodiment the following procedure is implemented in the scenario of Figure 1:
1. The product provider 12 registers to the product registration service provided by the service provider system 11. In an example embodiment the product provider has a user account in the service and logs into the service e.g. by means of a user name and password. If the product provider does not have an account yet, one can be created in connection with uploading product information. The product provider uploads information about one or more products.
   The product provider may upload information about one product or a whole product catalog, for example. The product information may be uploaded over an internet connection which may be encrypted or otherwise secured (the connection may be for example an SSL connection). The product information may be uploaded for example by using a web form provided by the service provider or in the form of a spread sheet or a file.
   In an embodiment the service provider system 11 may fetch the product information automatically without manual uploading. The product information may be fetched for example through an interface providing access to the product information. The interface may be for example an API (Application Programming Interface) of the product provider or a distributor. Such an interface may be used for automatically updating product information in the service provider system as well. It must be noted that the product information is not necessarily fetched or uploaded directly from the product provider. Instead the source of the product information may be some intermediate player, such as distributor.
2. The service provider system 11 generates unique product identifiers for the product(s) and produces a certificate of authenticity for each product. The certificate of authenticity includes the unique product identifier. The service provider system 11 keeps a record of the unique product identifiers and associated products and product providers. As an example, product XYZ receives unique product identifier xyz123.
3. The service provider system 11 transmits the certificates of authenticity to the product provider 12. The certificates of authenticity may be given for example in the form of PDF documents or in some other suitable electronic form. The certificates of authenticity may be submitted directly to the product provider or to some intermediate player, such as a distributor.
4. The product provider 12 sells, gives, loans, or otherwise transfers the product XYZ with associated certificate of authenticity to the end user 13. The product XYZ may be sold directly from the manufacturer to the end user or there may be one or more intermediate players (for example distributors) between the manufacturer and the end user.
5. The end user 13 registers the product XYZ in a service provided by the service provider system 11. The end user 13 accesses the service provider system 11 using a suitable electronic apparatus, such as a computer or a handheld communication device. For example, a web address for registering the product may be given in the certificate of authenticity. In an example embodiment the end user has a user account in the service and logs into the service e.g. by means of a user name and password. If the end user does not have an account yet, one can be created in connection with product registration. The product is registered by the end user giving the associated unique product identifier xyz123 or other token identified in the certificate of authenticity.
6. The service provider system 12 keeps a record of products (identified by the unique product identifiers) registered to different end users.
7. The service provider system 11 provides end user information to the product provider 12. The end user information that is provided may include information about which products have been registered to certain user or group of users or a list of users to whom a certain product has been registered, for example. Different examples of information that may be provided are discussed in more detail below.
8. The product provider 12 may then design and distribute for example targeted marketing campaigns on the basis of the received end user information. The marketing campaigns may be implemented within the service provider system 11 or distributed directly to the end users by some other means.
9. The service provider system 11 makes information about registered product ownerships available to other end users 14. In this example information about the end user 13 owning product XYZ is made available. Making available may mean for example that the end users may access the information through an end user interface. In an example implementation, the ownership information is shown in an activity stream of the respective end users. For the sake of clarity it is mentioned that also end user 13 can access the ownership information even though it is not illustrated in the Figure.

By means of making available information about product ownerships (and possibly also other information about the products) the system builds a social network around the products. The social network may be used for identifying unidentified items (e.g. antique) and to confirm authenticity of products (at least to some extent).

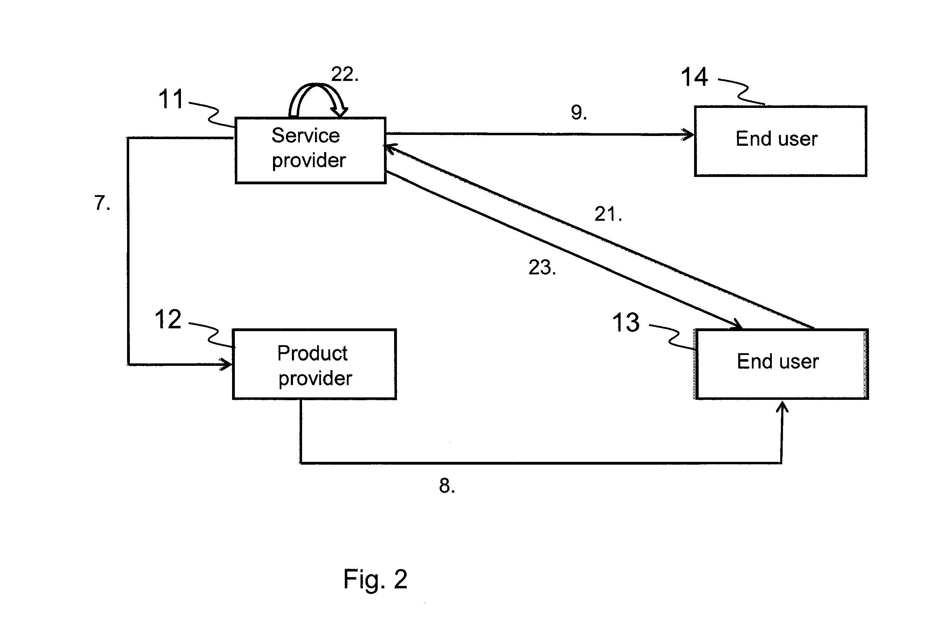

Figure 2 shows a scenario according to another example embodiment. The scenario is similar to that of Figure 1, but in this example the following procedure is illustrated:
21. End user 13 uploads information about one or more products and a request to certify authenticity of the product and or to obtain a unique product identifier for the product.
   The product information may be uploaded over an internet connection which may be encrypted or otherwise secured (the connection may be for example an SSL connection). The product information may be uploaded for example by using a web form provided by the service provider or in the form of a spread sheet or a file. The product information may be a picture of the product, for example. Also other information such as name, producer and age of the product may be included.
22. The service provider system 11 obtains information certifying authenticity of the product. In general, the information is obtained from a suitable third party/parties.
   The information may be obtained from experts, i.e. the request to certify authenticity of the product may be forwarded to an expert who evaluates the product and acknowledges or contests authenticity of the product. This may be used for example in case of certifying authenticity of antique items. Alternatively the request may be forwarded to the producer of the product. This may suit better for never products (products that continue to be produced). Yet another alternative is to rely on the social network for certifying the authenticity. In an example, the request to certify authenticity may be posted on a web site of the service and opinions on the authenticity of the product may be requested from other users of the service. Then, if certain number of other end users acknowledge authenticity of the product, it is concluded that there is sufficient certainty of the authenticity of the product. Also, if certain number of other end users contest authenticity of the product, it is concluded that authenticity of the product cannot be approved.
   After confirming authenticity of the product, the service provider system 11 generates a unique product identifier for the product. Additionally the service provider may produce a certificate of authenticity for the product. The certificate of authenticity includes the unique product identifier. The service provider keeps a record of the unique product identifiers and associated products and information relating to the products.
   If authenticity of the product cannot be approved, the end user who sent the request is informed of this in a suitable manner, e.g. by email.
23.The service provider system 11 transmits the unique product identifier and possibly also certificate of authenticity to the end user 13.

Phases 7-9 are implemented the same way as disclosed in connection with Figure 1.

By means of the procedure illustrated in Figure 2 end users are provided with a possibility to register products that they already own but that do not have a unique identifier in the service provider system yet. The products that end users may register may be for example, antique, handcrafts or industrial products.

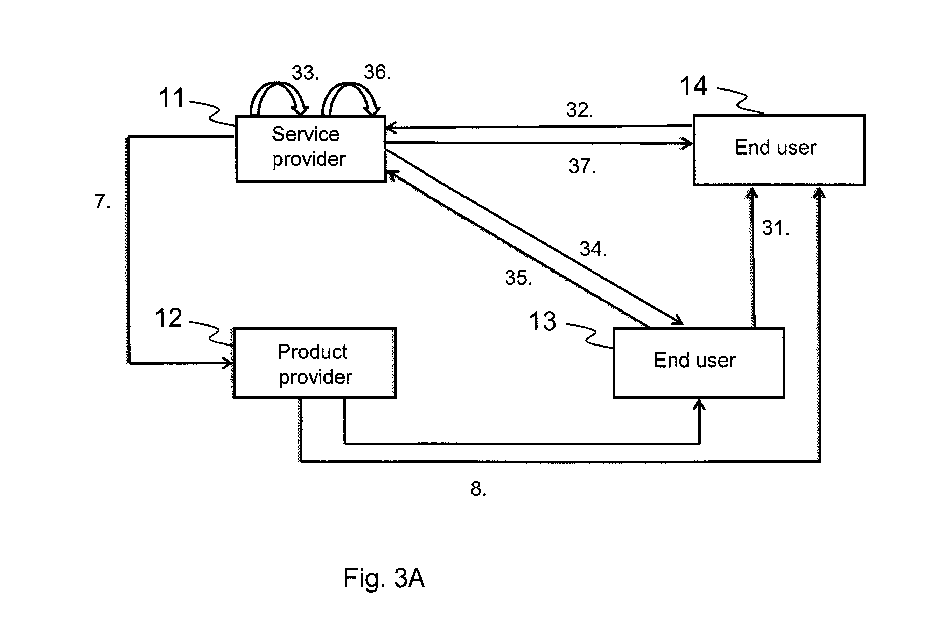

Figure 3A shows a scenario according to yet another example embodiment. The scenario is similar to that of Figure 1, but in this example the following procedure is illustrated:
31.The end user 13 sells, loans, gives or otherwise transfers a product NN she has registered with the service provider system 11 to the end user 14. Together with the product NN the end user 13 gives to the end user 14 a unique product identifier nn1234 and/or a certificate of authenticity associated with the product.
32.The end user 33 register ownership of the product NN in the service provider system 11.
33.The service provider system 11 detects that the product NN (the unique product identifier nn1234 associated with the product) is already registered to the end user 13.
34.The service provider system 11 sends to the end user 13 an inquiry requesting authorization to transfer the ownership of the product NN to the end user 33. The inquiry may be sent for example in an email or text message or by some other electronic means.
35.The end user 13 responds to the inquiry 34. Herein, it is assumed that the end user 13 accepts the transfer.
36. The service provider system 11 registers (or re-registers) the product NN to the new owner, the end user 33.
37. Finally, the service provider system 11 confirms the registration of the ownership to the end user 33.

Phases 7 and 8 are implemented the same way as disclosed in connection with Figure 1. In this case, it is illustrated that the product provider campaigns may be targeted to the end user 14 as well. Also phase 9 of Figure 1 may be included, but it is not shown for the sake of clarity.

In case the end user 13 does not accept the transfer of the ownership of the product NN to the end user 14 in phase 35, the service provider system 11 notifies the end user 14 of this and maintains the product registered to the end user 13. The end user 14 may then resolve the issue with the end user 13.

By means of the procedure shown in Figure 3A the system requests from a previous owner permission or acceptance to re-register a product to a new owner. In this way a seller of a product authorises transfer of the registration to the new owner.

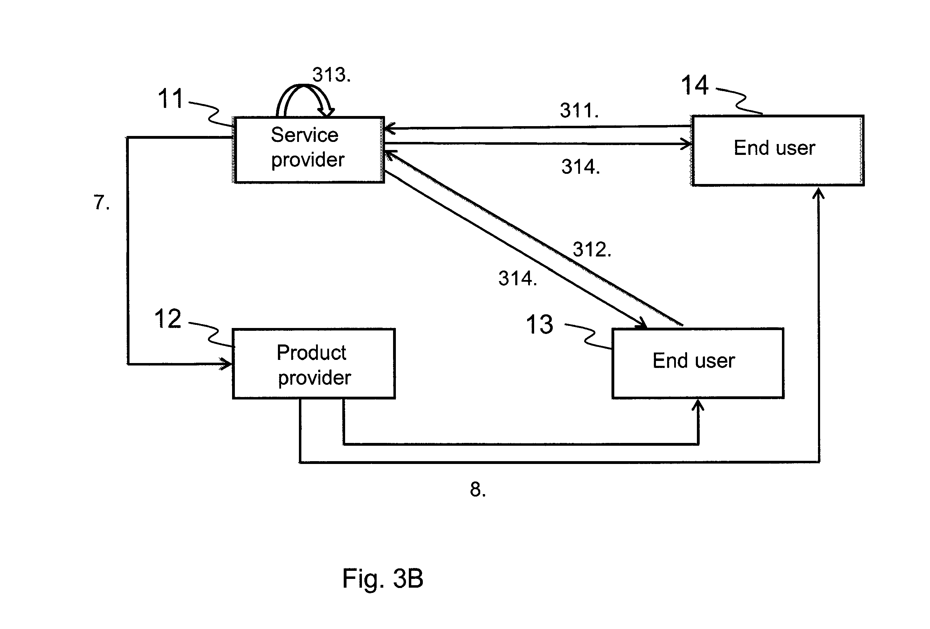

Figure 3B shows a scenario according to yet another example embodiment. The scenario is similar to that of Figure 1, but in this example the following procedure is illustrated:
311. The end user 14 uploads additional information relating to a product XX to the service provider system 11. The additional information may be for example an indication of liking the product, wishing to obtain ownership of the product, or wishing to sell, loan, give or otherwise transfer the product, comments relating to the product, or images comprising the product.
312. The end user 13 uploads additional information relating to a product YY to the service provider system 11.
313. The service provider system 11 keeps record of the additional information provided by the end users.
314. The service provider system 11 makes the additional information available to other end users. Making available may mean for example that the end users may access the information through an end user interface. In an example implementation, the additional information uploaded by end users is shown in an activity stream of the respective end users.

Phases 7 and 8 are implemented the same way as disclosed in connection with Figure 1. In this case, it is illustrated that the product provider campaigns may be based on the additional information certain users have given for certain products. That is the campaigns are not necessarily targeted only to owner of a certain product, but instead to end users who have indicated willingness to buy or liking a certain product, for example.

It must be noted that the features disclosed in connection with Figures 1-3B are not mutually exclusive. Instead one system may implement all shown features or a suitable combination of the features.

It must be noted that uploading information in various embodiments may be performed by clicking a picture or a link on a web page. This suits well for example for indicating that one likes, wants, or owns a certain product.

It must be noted that making the information (ownership or other product information) available to other end users may be restricted to certain subset of other end users. An end user may have a possibility to publish ownership only among some closed group of end users, for example. Alternatively the information may be available to all users of the system with no restrictions. In a yet another alternative, the information is publicly available in the Internet to anyone browsing to appropriate pages.

In an example embodiment the product information that is uploaded to the service provider system comprises one or more of the following:
- Name of the product
- Description
- Producer
- Designer
- Year of manufacture
- Photo
- Prise
- Where to buy the product
- Link to a location where to buy the product
- Tags/keywords
- Physical location of the product.

In an example embodiment the unique product identifier is a random string of numbers and letters or other symbols. In an embodiment the identifier is of following format: thing:123abc. It must be noted that this is a non-restrictive example and other formats of identifiers may be used as well.

In an example embodiment one unique product identifier and one certificate of authenticity matches exactly one product instance. That is, John's chair and George's chair have their own certificates even though the chairs are of the same design. In another embodiment one unique product identifier and one certificate of authenticity matches one product type. That is, if John's chair and George's chair are of the same design, their unique product identifier and certificates of authenticity are equal, too. Also a combination of instance specific and product class specific identifiers is possible.

In an example embodiment the products that are handled in the service provider system are physical products, but they may be electronic or virtual representations of physical products as well. An electronic or virtual representation of a physical product may be used for example on an entertainment site in the Internet, such as Habbo® Hotel of Sulake Corporation Oy.

In an example embodiment communication between the service provider system and end user apparatuses and product provider takes place over an Internet connection. The connection may be encrypted or otherwise secured (the connection may be for example an SSL connection). The interfaces to the service provider system may be web browser interfaces.

In an example embodiment the end user information that is provided in phase 7 of Figures 1-3B is filtered according to certain criteria before providing the information to the product provider. The resulting information that is provided may be one of the following:
- List of users that own certain product.
- List of users that own certain set of products.
- List of users that own certain product(s) accompanied with information about other products that the users own. The information about other products may be limited to other products of certain product provider or information about any products owned by the users may be included.
- List of products that certain users own. The users may be specifically named users, e.g. customers of certain product provider, or the users may be certain type of users, e.g. users matching certain age group, gender, place of residence etc.
- Information about the user that owns one specific product.
- One or more products that certain user owns, but wants to sell, loan, give or otherwise transfer.
- One or more products that certain user wants to buy.
- Physical location of owners of certain product or product set.
- Demographic information relating to owners of certain products (for example, sex and/or age).

End users of the system may be given possibility to access similarly filtered information.

By being a manufacturer independent entity the product registration service of the service provider 11 can provide a reliable source for certificates of authenticity for various different products. The product registration service may also serve as a centralized repository for keeping record of products owned by different users and/or for keeping record of users who own a certain product and/or for keeping record of users who like, want to have, own but want to sell a certain product. A record of user experiences or other user opinions of products may be kept as well. It must be noted that the product registration provided by embodiments of the invention is not mandatory and registration is not needed for enabling normal use of the product. This is a distinction for example in relation to certain electronic products, such as computer programs, that need to be registered in order to enable normal use of the product.

By means of the social network building around the products in the system, the end users of the system may find possibilities to buy, sell, loan or otherwise obtain or distribute products they want.

In an example embodiment registering a product is shown in an activity stream of the corresponding user (end user). Activity stream is a stream of information showing actions of the corresponding user in the service. The activity stream may include for example user's comments or announcements relating to certain products, product information uploaded by a user and/or product ownerships registered by the user.

In an example embodiment the product registration service provides to the end user a place to keep track of products they own. The service is not limited to products of one product provider or manufacturer, whereby the end users can have an overall view to many or even all products they own by different providers. The end users may have an overall view on products owned by other users (products owned by certain user or other users who own the same product for example). In this way the service creates a social network of products or social networks formed by ownership of products.

In an example embodiment the service maintains information about ownership history of a certain product, whereby users of the service may obtain knowledge of history of products owned by themselves or other users of the system. In this way for example new owners of a pre-used product may gather information about history of their product.

Embodiments of the present invention may be implemented in software, hardware, application logic or a combination of software, hardware and/or application logic. The software, application logic and/or hardware may reside on a server of a service provider system (such as the service provider system 11 of Figures 1-3B).

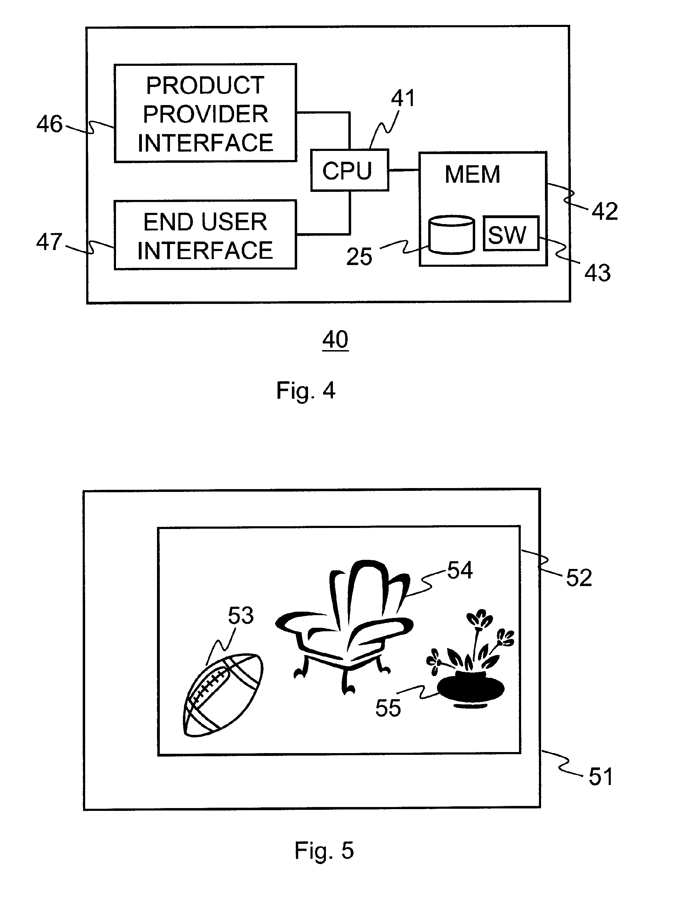

In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted in Figure 4 below. The computer-readable medium may be a digital data storage such as a data disc or diskette, optical storage, magnetic storage, or opto-magnetic storage. The computer-readable medium may be formed into a device without other substantial functions than storing memory or it may be formed as part of a device with other functions, including but not limited to a memory of a computer, a chip set, and a sub assembly of an electronic device.

Figure 4 shows an example block diagram of an apparatus 40 according to certain example embodiments of the invention. The apparatus 40 may be implemented on a general purpose computer or a server for example.

The apparatus 40 comprises a memory 42 configured to store computer program code (or software) 43 and a database 45. The apparatus 40 further comprises at a processor 41 for controlling the operation of the apparatus 40 using the computer program code 43.

The processor 41 may be a master control unit (MCU). Alternatively, the processor 41 may be a microprocessor, a digital signal processor (DSP), an application specific integrated circuit (ASIC), a field programmable gate array, a microcontroller or a combination of such elements. Figure 4 shows one processor 41, but the apparatus 40 may comprise a plurality of processors 41. memory 76 may be, for example, random access memory, flash memory, hard disk, hard disk array, optical storage, memory stick, memory card and/or magnetic memory. The database 45 may be for example an SQL-database.

The processor in combination with the computer program 43 is configured to implement a product provider interface 46 and an end user interface 47 for enabling interaction with product providers and end users, respectively.

The product provider interface 46 and the end user interface 47 are configured to communicate with other apparatuses over a data communication interface (not shown). The data communication interface may be for example a LAN (local area network) interface or an Ethernet interface or some wireless communication interface. The product provider interface 46 and the end user interface 47 are implemented for example as web interfaces that are accessible with a web browser application.

The database 45 is configured to store unique product identifiers according to embodiments of the invention. The database may further store information about associated product providers and certificates of authenticity and other information relating to products. Additionally the database may be used for maintaining user account information and for keeping record of products registered to different users.

A skilled person appreciates that in addition to the elements shown in Figure 4, the apparatus 40 may comprise other elements, such as microphones, displays, as well as additional circuitry such as input/output (I/O) circuitry, memory chips, and the like.

As to the operations of the embodiments of the invention, when the computer program code 43 is executed by the at least one processor 41, this causes the apparatus 40 to implement operations of a service provider according to embodiments of the invention.

Figure 5 shows an end user interface according to an example embodiment. The end user interface is a graphical user interface that is displayed on a display of a computer, mobile device or the like. The end user interface comprises an application window 51 and the application window comprises an image 52 comprising a plurality of items 53-55.

Each of the items 53-55 in the image 52 is an interface that can be used for registering the shown product or for inputting information relating to the shown product. For example responsive to a user clicking or selecting an item with a pointing device (for example mouse, stylus, finger) a window or a form for inputting information or requesting registration is shown to the user. In this way an easy to use and intuitive user interface is provided to the users.

It must be noted that similarly an image of an individual product may be an interface that can be used for product registration or for inputting product related information.

In an example embodiment, an end user interface is provided at least partially through a near field communication connection. Near Field Communication (NFC) is a form of Radio Frequency Identification (RFID) technology. It is to be noted that depending on the implementation also other short range communication technologies, such as RFID or Bluetooth, may be employed instead of near field communication.

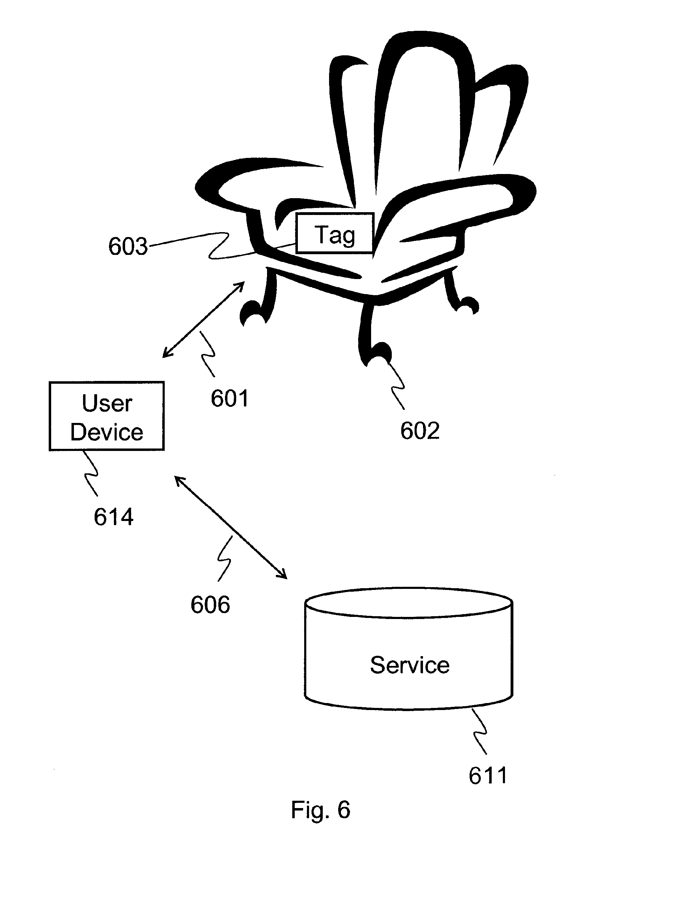

Figure 6 shows a scenario according to an embodiment of the invention. The scenario comprises a user device 614 (corresponding to the end user 14 in Figures 1-3B), a physical item 602 with an NFC tag 603 on it and a service 605 (corresponding to the service 11 of Figures 1-3B). The user device 614 may be for example a mobile phone or some other (portable) electronic device, which comprises NFC communication capabilities. In this example the physical item 602 is a chair, but likewise the physical item could be any other physical, concrete object. The user device 614 is capable of reading information from the tag 603 over an NFC connection. The user device 614 is capable of communicating with the service 611 over a radio link 606 or some other communication connection.

In an embodiment of the invention following steps take place in the scenario of Figure 6.
1 The user of the user device 614 locates the NFC tag sticker 603 on the item 102.
2 The user touches the tag 603 with the user device 614.
3 The user device 614 establishes an NFC connection with the tag 603, reads the NFC tag 603, and parses contents of the tag 603. An application in the user device 600 calculates or otherwise obtains a unique identifier for the item 602.
4 The user device 614 obtains information about the item 602 using the unique identifier. Optionally, the user device 614 contacts a backend service 611 using a suitable (radio) communication technology and queries information from the backend service with the unique identifier. The user device receives as a response for example a description of the item 602 (possibly including multimedia such as an image or video of the item 602). Alternatively, information about the item 602 may be readily available in a database or the like in the user device 614. In yet another alternative, the unique identifier may include information about the item 602. Also combinations of the alternatives are possible.
5 The user device 614 provides information about the item 602 on the a display of the user device 614. For example an image of the item, a description of the item and a function button may be displayed. In an embodiment of the invention the function button allows a user to register the item 602 or to input information relating to the item 602 to the service 611. The additional information may include: liking/disliking the product, wishing to obtain ownership of the product, wishing to sell, loan, give or otherwise transfer the product, comments relating to the product, images comprising the product. In this example the tag 603 is the certificate of authenticity or part of it and the associated unique product identifier xyz123 or other token is automatically read and transmitted over the NFC connection. In this way, the user does not need to manually type in any identifiers for identifying the product.
6 Upon manipulation of the function button displayed to the user (e.g. pushing the function button), the user device 614 sends a signal to the service 611, which in turn associates the user of the user device 614 with the item 602.

Various embodiments have been presented. It should be appreciated that in this document, words comprise, include and contain are each used as open-ended expressions with no intended exclusivity.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention. It is also noted that the above embodiments are used merely to explain selected aspects or steps that may be utilized in implementations of the present invention. Some features may be presented only with reference to certain example embodiments of the invention. It should be appreciated that corresponding features may apply to other embodiments as well.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method comprising:
providing a general purpose product registration system by
providing a product provider interface for uploading product information concerning certain one or more products;
generating unique product identifiers and certificates of authenticity for said certain one or more products;
distributing the unique product identifiers and the and certificates of authenticity through the product provider interface to product providers associated with said certain one or more products;
providing an end user interface that enables end users to register ownerships of products by registering unique product identifiers associated with the products,
keeping record of unique product identifiers registered to end users, and
providing to product providers end user information comprising information about unique product identifiers registered to end users, and
making information about registered product ownerships available to other end users through the end user interface.

2. The method of claim 1, further comprising:
enabling end users to register, through the end user interface, additional information about products, the additional information comprising one or more of the following: liking the product, disliking the product, wishing to obtain ownership of the product, wishing to sell, loan, give or otherwise transfer the product, comments relating to the product, images comprising the product; and
making the additional information available to other end users through the end user interface.

3. The method of claim 1 or 2, further comprising:
enabling end users to upload, through said end user interface, product information relating to one or more end user products, and to have a unique product identifier generated for said one or more end user products.

4. The method of any one of claims 1-3, wherein
the products are physical products or digital representations of physical products.

5. The method of any one of claims 1-4, further comprising:
generating the unique product identifiers upon request from product providers associated with the products.

6. The method of any one of claims 1-5, further comprising:
filtering the end user information according to certain criteria prior to providing the end user information to the product providers.

7. The method of any one of claims 1-6, further comprising:
providing, through said end user interface, to the end users history information related to certain unique product identifier.

8. The method of any one of claims 1-7, further comprising:
enabling end users to re-register ownerships of pre-owned products through said user interface.

9. The method of any one of claims 1-8, further comprising:
providing the end user interface at least partially through tagged items in images.

10. The method of any one of claims 1-9, further comprising:
providing the end user interface at least partially through a near field communication connection.

11. An apparatus comprising:
a memory, and
a processor for controlling the operation of the apparatus, configured to control the apparatus to perform
providing a general purpose product registration system by providing a product provider interface for uploading product information concerning certain one or more products;
generating unique product identifiers and certificates of authenticity for said certain one or more products;
distributing the unique product identifiers and the and certificates of authenticity through the product provider interface to product providers associated with said certain one or more products;
providing an end user interface that enables end users to register ownerships of products by registering unique product identifiers associated with the products,
keeping record of unique product identifiers registered to end users in said memory,
providing to product providers end user information comprising information about unique product identifiers registered to end users through the product provider interface, and
making information about registered product ownerships available to other end users through the end user interface.

12. The apparatus of claim 11, wherein
the products are physical products or digital representations of physical products.

13. The apparatus of claim 11 or 12, wherein the processor is further configured to
control the apparatus to perform:
providing the end user interface at least partially through tagged items in images.

14. The apparatus of any one of claims 11-13, wherein the processor is further
configured to control the apparatus to perform:
providing the end user interface at least partially through a near field communication connection.

15. A computer readable medium embodying computer executable program code
configured to be executed by a processor of an apparatus, to cause the apparatus to perform:
providing a general purpose product registration system by
providing a product provider interface for uploading product information concerning certain one or more products;
generating unique product identifiers and certificates of authenticity for said certain one or more products;
distributing the unique product identifiers and the and certificates of authenticity through the product provider interface to product providers associated with said certain one or more products;
providing an end user interface that enables end users to register ownerships of products by registering unique product identifiers associated with the products,
keeping record of unique product identifiers registered to end users, and
providing to product providers end user information comprising information about unique product identifiers registered to end users, and
making information about registered product ownerships available to other end users through the end user interface.
